# EUROPÄISCHE PATENTANMELDUNG

(11) **EP 3 591 525 A1**
(43) Veröffentlichungstag der Anmeldung: **08.01.2020**
(21) Anmeldenummer: 18181819.6
(22) Anmeldetag: 05.07.2018
(51) Int. Cl.: G06F 9/50

(54) **VERTEILEN VON UNTERANWENDUNGEN EINER BESTIMMTEN ANWENDUNG AUF RECHNER VON PLATTFORMEN ZUMINDEST ZWEIER VERSCHIEDENER EBENEN**

(71) Anmelder: Siemens Aktiengesellschaft, 80333 München (DE)
(72) Erfinder: Meixner, Sebastian, 1220 Wien (AT); Li, Fei, 1220 Wien (AT); Schall, Daniel, 1220 Wien (AT)
(74) Vertreter: Maier, Daniel Oliver

(57) **Zusammenfassung**

Die Erfindung betrifft ein Verfahren, unter Verwendung eines Computers, zum Verteilen von Unteranwendungen einer bestimmten Anwendung auf Rechner zumindest zweier verschiedener Ebenen, wobei eine erste Ebene mehr Rechenleistung zur Verfügung hat als eine zweite Ebene. Damit dies automatisiert und nachvollziehbar geplant werden kann, ist vorgesehen,
- dass Bedingungen zur Ausführung der Anwendung sowie auch der einzelnen Unteranwendungen in einer Datenbank erfasst werden,
- dass den Bedingungen zur Ausführung entsprechende Voraussetzungen der verschiedenen Ebenen, nämlich Voraussetzungen der mindestens einen Plattform einer Ebene, in einer Datenbank erfasst werden,
- dass die für die bestimmte Anwendung notwendigen Unteranwendungen ausgewählt werden,
- dass aus den Bedingungen für die Anwendung sowie auch für die einzelnen Unteranwendungen und aus den diesbezüglichen Voraussetzungen der verschiedenen Ebenen, nämlich der jeweils mindestens einen Plattform der Ebenen, automatisch ein Bedingungserfüllungsproblem erstellt und gelöst wird, und
- dass entsprechend der Lösung des Bedingungserfüllungsproblems die Unteranwendungen auf Rechner der verschiedenen Plattformen verteilt werden.

## Beschreibung

### GEBIET DER ERFINDUNG

Die vorliegende Erfindung betrifft ein Verfahren, unter Verwendung eines Computers, zum Verteilen von Unteranwendungen einer bestimmten Anwendung auf Rechner zumindest zweier verschiedener Ebenen, wobei eine erste Ebene mehr Rechenleistung zur Verfügung hat als eine zweite Ebene.

Das Verfahren kann generell dort angewendet werden, wo eine bestimmte Software-Anwendung in mehrere Unteranwendungen aufgeteilt werden kann und diese Unteranwendungen von verschiedenen Rechnern ausgeführt werden, etwa im Bereich der Industrieautomation oder bei Anwendungen für das sogenannte Internet of Things.

### STAND DER TECHNIK

Grundsätzlich gibt es zwei verschiedene Ebenen, auf denen Software ausgeführt werden kann. Eine Ebene ist eine sogenannte Cloud, zu deutsch Rechnerwolke oder Datenwolke. Die Cloud Ebene kann aus mehreren unterschiedlichen Cloud Plattformen bestehen welche üblicherweise von verschiedenen Anbietern angeboten werden. Eine Cloud Plattform stellt IT-Infrastruktur, wie beispielsweise Speicherplatz, Rechenleistung oder Anwendungssoftware, als Dienstleistung über das Internet zur Verfügung. Cloud Plattformen haben praktisch unbegrenzte Ressourcen zur Verfügung, wodurch man Dienste, die auf einer Cloud Plattform ausgeführt werden, beliebig skalieren, insbesondere erweitern, kann. Nachteile der Cloud Ebene sind fehlende Vertraulichkeit und fehlende Echtzeit-Dienste. Die fehlende Vertraulichkeit ist darin begründet, dass der Anwender meist nicht Besitzer der Cloud Plattform ist und somit keine Kontrolle über seine in der Cloud befindlichen Daten hat. Echtzeit-Dienste sind kaum möglich, da mehrfach Daten vom Anwender über das Internet in die Cloud Ebene und von dort zurück gesendet werden müssen, was jeweils durch die Übertragungszeit zu Verzögerungen führt.

Die zweite Ebene, auf der Software ausgeführt werden kann, wird als Edge bezeichnet, zu deutsch Kante oder Rand. Edge Computing bezeichnet im Gegensatz zum Cloud Computing die dezentrale Datenverarbeitung, insbesondere am Rand eines Rechner-Netzwerks. Computer-Anwendungen, Daten und Dienste werden von zentralen Knoten (Rechenzentren) weg zu den äußeren Rändern eines Netzwerks verlagert. Auch hier ist es möglich, dass die Edge Ebene aus mehreren Plattformen besteht. Das Netzwerk der Edge befindet sich meist - rechtlich und räumlich - im Besitz des Anwenders. Dadurch ist Vertraulichkeit und die Möglichkeit von Echtzeit-Diensten gegeben, Letzteres insbesondere dann, wenn die einzelnen Einheiten der Edge räumlich nahe zueinander liegen und durch schnelle Netzwerkverbindungen miteinander verbunden sind. Nachteilig ist, dass die Ressourcen der Edge begrenzt sind und nicht beliebig erweiterbar sind.

Jede Ebene kann von einer oder mehreren Plattformen realisiert werden. Jede dieser Plattformen kann wiederum unterschiedliche funktionale und nichtfunktionale Anforderungen erfüllen.

Will man die Vorteile beider Ebenen kombinieren, müssen Anwendungen entsprechend in Unteranwendungen, sogenannte Microservices, aufgeteilt werden, welche dann auf einer der beiden Ebenen laufen. Microservices sind ein Architekturmuster der Informationstechnik, bei dem komplexe Anwendungssoftware aus unabhängigen Unteranwendungen zusammengesetzt wird, die untereinander mit sprachunabhängigen Programmierschnittstellen kommunizieren. Die Unteranwendungen sind weitgehend entkoppelt und erledigen jeweils eine kleine Aufgabe. Die Entscheidung, welche Unteranwendung auf welcher Ebene und weiters auf welcher konkreten Plattform ausgeführt werden soll, ist aufwändig, fehleranfällig und sollte am besten automatisiert erfolgen. Entscheidungskriterien liefern die nichtfunktionalen Anforderungen (englisch non-functional requirement, NFR) der jeweiligen Unteranwendung, die beispielsweise die Skalierbarkeit der Anwendung und deren benötigte Vertraulichkeit enthalten.

Nachdem entschieden worden ist, ob die Unteranwendung in der Cloud oder in der Edge ausgeführt werden soll, kann entschieden werden, auf welcher konkreten Cloud- oder Edge-Plattform die Unteranwendung ausgeführt werden soll, basierend auf den Anforderungen der Unteranwendung an deren Zielplattform. Anschließend kann entschieden werden auf welcher Einheit (welchem Host) genau auf dieser Plattform dies geschehen soll, etwa, auf welcher physikalischen Einheit einer Edge Plattform. Der Host muss entsprechende Ressourcen (Software, Werkzeuge, Bibliotheken) in der benötigten Version aufweisen, damit die Unteranwendung richtig ausgeführt werden kann. Weiters muss die Kommunikation zwischen zwei verschiedenen Plattformen möglich sein, wenn verschiedene, voneinander abhängige Unteranwendungen auf jeweils eine der Plattformen verteilt werden.

Die Entscheidung, welche Unteranwendung auf welcher Ebene ausgeführt werden soll, wurde bisher entweder mit Unterstützung des Anwenders durchgeführt, wie dies beim sogenannten Disnix-System der Fall ist.

Mohamed El Amine Matogui und Sebastien Leriche schlagen in der Veröffentlichung "A middleware architecture for autonomic software deployment" vor, dass der Anwender Randbedingungen für die Unteranwendungen setzt, die dann in ein sogenanntes Constraint Satisfaction Problem (CCSP) ungeformt werden, ohne dass jedoch bestimmte Abhängigkeiten zwischen benötigter Software berücksichtigt werden. In der Folge wird dann etwaige benötigte Software auf eine Einheit heruntergeladen, was oft nicht wünschenswert ist, wenn nicht genug Speicherplatz vorhanden ist.

Viele Ansätze, um Cloud und Edge miteinander zu verbinden, finden sich unter dem Schlagwort Fog Computing, siehe etwa "A Survey of Fog Computing: Concepts, Applications and Issues" von Shanhe Yi, Cheng Li und Qun Li, oder "Fog Computing: A Platform for Internet of Things and Analytics" von Flavio Bonomi, Rodolfo Milito, Preethi Natarajan and Jiang Zhu, N. Bessis and C. Dobre. Darunter finden sich Ansätze, wo Entwickler festlegen, welche Teile der Funktionalität einer Unteranwendung in die Cloud ausgelagert werden können, wenn eine Einheit der Edge überlastet ist. Oder es gibt Ansätze, wo die Prozesse anhand von nichtfunktionalen Anforderungen, wie Vertraulichkeit, immer einer bestimmten Ebene zugeordnet werden müssen.

Amazon Greengrass ermöglicht es Entwicklern, Anwendungen transparent entweder in der Cloud oder auf Greengrass IoT Einheiten, welche eine Edge Plattform bilden, ausführen zu lassen, was anlassbezogen geschehen kann. Auch unter Google Cloud IoT Core und Microsoft Azure IoT Suite erlauben die Verknüpfung von Edge und Cloud.

Keines dieser bisher bekannten Systeme erlaubt es jedoch, die Entscheidungen, welche Unteranwendung auf welcher Ebene und auf welcher konkreten Plattform laufen soll, automatisiert und nachvollziehbar zu planen.

### DARSTELLUNG DER ERFINDUNG

Es ist somit eine Aufgabe der Erfindung, ein Verfahren anzugeben, mit welchem die Entscheidungen, welche Unteranwendung auf welcher Ebene laufen soll, automatisiert und nachvollziehbar geplant werden und dieser Plan insbesondere auch geändert werden kann.

Diese Aufgabe wird durch ein Verfahren nach Anspruch 1 gelöst, welches ein Verfahren unter Verwendung eines Computers betrifft, zum Verteilen von Unteranwendungen einer bestimmten Anwendung auf Rechner zumindest zweier verschiedener Ebenen, umfassend jeweils mindestens eine konkrete Plattform, wobei eine erste Ebene (entsprechend die Plattform(en) der ersten Ebene) mehr Rechenleistung zur Verfügung hat als eine zweite Ebene (entsprechend die Plattform(en) der zweiten Ebene). Dabei ist vorgesehen,
- dass Bedingungen zur Ausführung der Anwendung sowie der einzelnen Unteranwendungen in einer Datenbank, insbesondere einer Graphdatenbank, erfasst werden,
- dass den Bedingungen zur Ausführung entsprechende Voraussetzungen der verschiedenen Ebenen, nämlich Voraussetzungen der mindestens einen Plattform einer Ebene, in einer Datenbank, insbesondere einer Graphdatenbank, erfasst werden,
- dass die für die bestimmte Anwendung notwendigen Unteranwendungen ausgewählt werden,
- dass aus den Bedingungen für die Anwendung sowie auch für die einzelnen Unteranwendungen und aus den diesbezüglichen Voraussetzungen der verschiedenen Ebenen, nämlich der jeweils mindestens einen Plattform der Ebenen, automatisch ein Bedingungserfüllungsproblem erstellt und gelöst wird, und
- dass entsprechend der Lösung des Bedingungserfüllungsproblems die Unteranwendungen auf Rechner der verschiedenen Plattformen verteilt werden.

Eine Plattform der ersten Ebene kann insbesondere eine sogenannte Cloud Plattform (Rechnerwolke) sein, die mit dem Computer, der das erfindungsgemäße Verfahren ausführt, über Internet verbunden ist. Eine Plattform der zweiten Ebene kann ein lokales Rechnernetzwerk sein, das räumlich näher am Computer liegt, der das erfindungsgemäße Verfahren ausführt. Eine Plattform der zweiten Ebene kann also ein dem Anwender des Verfahrens räumlich nahe liegendes Rechner-Netzwerk sein, das einen zeitlich kürzeren Datentransport vom und zum Computer des Anwenders erlaubt als eine, insbesondere alle, Plattformen der ersten Ebene.

Beim erfindungsgemäßen Verfahren wird es Software-Entwicklern ermöglicht, nichtfunktionale Anforderungen und andere Randbedingungen für deren Unteranwendungen vorzugeben, wobei das erfindungsgemäße System einen optimierten Plan zur Verteilung der Software (deployment plan) bestimmt, nämlich zur Verteilung der Unteranwendungen auf eine von möglicherweise mehreren Cloud Plattformen oder eine von möglicherweise mehreren Edge Plattformen.

Mit einem Werkzeug in Form einer Software kann der Software-Entwickler die nichtfunktionale Anforderungen und anderen Randbedingungen für bestimmte einzelne Unteranwendungen festlegen und auch sehen, welche Ebene und gegebenenfalls welche Einheit (welcher Rechner) dieser Ebene diese Anforderungen und Randbedingungen unterstützt. Diese Daten werden vorzugsweise in einer graphenorientierten Datenbank (auch als Graphdatenbank genannt) modelliert, wobei für eine bestimmte Unteranwendung geeignete Einheiten (Rechner) durch Traversieren des Graphen rasch und einfach ermittelt werden können.

Eine Graphdatenbank (oder graphenorientierte Datenbank) ist eine Datenbank, die Graphen benutzt, um stark vernetzte Informationen darzustellen und abzuspeichern. Ein solcher Graph besteht aus Knoten und Kanten, den Verbindungen zwischen den Knoten. Sowohl Knoten als auch Kanten können Eigenschaften, sogenannte Properties (bspw. Name, Identifikationsnummer, ...), besitzen. Graphdatenbanken bieten spezialisierte Graphalgorithmen, um komplizierte Datenbankabfragen zu vereinfachen. So bieten sie beispielsweise Algorithmen, um Graphen zu traversieren, d. h. alle direkten und indirekten Nachbarn eines Knotens zu finden, kürzeste Pfade zwischen zwei Knoten zu berechnen, bekannte Graphstrukturen wie beispielsweise Cliquen zu finden oder Hotspots besonders stark vernetzter Regionen im Graph zu identifizieren.

Die Anwender können dann eine Liste von Unteranwendungen liefern, die ausgeführt werden sollen und für welche ein optimierter Plan zur Verteilung erstellt werden soll. Die Optimierung bezieht sich dabei auf vom Anwender oder vom System selbst vorgegebene Ziele bzw. Zielfunktionen. Es können auch dynamische Randbedingungen berücksichtigt werden, die vom momentanen Zustand des Systems abgeleitet werden (z.B. Verfügbarkeit von Speicher oder Rechenleistung).

Weiters kann ein Kompromiss zwischen dem Erfüllungsgrad der nichtfunktionalen Anforderungen und den Kosten für die resultierende Verteilung von Unteranwendungen erreicht werden, wenn die Kosten für Ressourcen in den verschiedenen Cloud Plattformen in die Zielfunktion miteinbezogen werden. So kann beispielsweise die Ausfallsicherheit einer Unteranwendung erhöht werden indem mehrere Instanzen verteilt werden, aber nur dann wenn die akkumulierten Kosten für die benötigten Ressourcen in der Cloud unter einem bestimmten Schwellwert bleiben.

Entsprechend kann in einer Ausführungsform der Erfindung vorgesehen sein, dass bei der Erstellung des Bedingungserfüllungsproblems die Kosten für Ressourcen auf den einzelnen Plattformen berücksichtigt werden. Der entsprechende Verfahrensschritt besteht dann darin, dass aus den Bedingungen für die Anwendung sowie auch für die einzelnen Unteranwendungen und aus den diesbezüglichen Voraussetzungen der verschiedenen Ebenen, nämlich der jeweils mindestens einen Plattform der Ebenen, sowie den Kosten für Ressourcen auf den einzelnen Plattformen automatisch ein Bedingungserfüllungsproblem erstellt und gelöst wird.

Der optimierte Plan zur Verteilung wird erfindungsgemäß mit einem sogenannten CSP Verfahren bestimmt. Ein Constraint-Satisfaction-Problem (CSP; deutsch:
Bedingungserfüllungsproblem) ist eine Aufgabenstellung, wo ein Zustand (d.h. eine Belegungen von Variablen) gefunden werden soll, der alle aufgestellten Bedingungen (Constraints) erfüllt.

Ein Constraint-Satisfaction-Problem besteht aus einer Menge von Variablen, ihren Wertebereichen und den Bedingungen, die Verknüpfungen zwischen den Variablen herstellen und dadurch festlegen, welche Kombinationen von Werten der Variablen zulässig sind. Ein CSP wird gelöst, indem eine Belegung der Variablen gefunden wird, die allen Bedingungen genügt. Im Unterschied zu anderen Optimierungsproblemen, in denen eine "möglichst gute" Lösung gesucht wird, fordern Constraint-Satisfaction-Probleme eine vollständige Erfüllung jeder einzelnen Bedingung. Es kann dabei durchaus mehrere Lösungen geben.

Die Lösung des CSP-Verfahrens, also der gefundene Plan zur Verteilung der Software (deployment plan), kann vom Anwender händisch oder automatisch zur Ausführung freigegeben werden. Der Anwender kann den Plan einsehen, was diesen Plan transparent für den Anwender macht.

Es kann auch vorgesehen werden, dass ein einmal ermittelter Plan aufgrund von Messwerten, Zuständen und/oder Rückmeldungen von ausführenden Einheiten und/oder aufgrund von Vorgaben des Anwenders (z.B. vom Anwender festgelegte Ereignisse) einen Alarm auslöst oder geändert, insbesondere neu berechnet und ausgeführt, wird.

Eine Ausführungsform der Erfindung besteht darin, dass die Bedingungen zur Ausführung der Unteranwendungen und/oder die Voraussetzungen der verschiedenen Ebenen und/oder der konkreten Plattformen zumindest eine der folgenden Eigenschaften umfassen: Zuverlässigkeit, Verfügbarkeit, Skalierbarkeit, Vertraulichkeit, Effizienz, Sicherheit (Safety), Verwendbarkeit, Sicherheit (Safety), Preise für unterschiedliche Ressourcen, Kommunikation mit anderen Unteranwendungen und/oder Plattformen. Betreffend die Kommunikation mit anderen Unteranwendungen und/oder Plattformen umfasst dies die Notwendigkeit der Kommunikation mit anderen Unteranwendungen beziehungsweise die Möglichkeit der Kommunikation mit anderen Plattformen. Skalierbarkeit bedeutet, dass der Anwendung bei Bedarf mehr Ressourcen, also etwa mehr Rechenleistung, mehr Speicher oder überhaupt mehrere Rechner zur Verfügung gestellt werden.

Eine Ausführungsform der Erfindung besteht darin, dass die Bedingungen zur Ausführung der Unteranwendungen und/oder die Voraussetzungen der verschiedenen Ebenen und/oder der konkreten Plattformen und/oder der einzelnen Rechner (Recheneinheiten) zumindest eine der folgenden Eigenschaften umfassen: Vorhandensein zumindest einer bestimmten zusätzlich benötigten Hard- und/oder Software, insbesondere in der richtigen Version.

Das heißt, dass die Voraussetzungen der verschiedenen Ebenen können Voraussetzungen der einzelnen Rechner der jeweiligen Ebene umfassen. Das heißt wiederum, es können nicht nur die Eigenschaften einer ganzen Ebene oder Plattform, sondern auch - zusätzlich oder alternativ - die Eigenschaften bestimmter Rechner oder Hosts einer Ebene oder Plattform festgelegt werden.

Insbesondere in diesem Fall kann vorgesehen sein, dass entsprechend der Lösung des Bedingungserfüllungsproblems zumindest eine Unteranwendung auf einen bestimmten Rechner einer konkreten Plattform einer Ebene verteilt, also diesem zur Ausführung zugewiesen, wird.

Es kann vorgesehen sein, dass die Bedingungen zur Ausführung der Unteranwendungen umfassen, dass bestimmte Randbedingungen automatisch, basierend auf vorhandener Information ermittelt werden. Zum Beispiel kann vorgesehen sein, dass zwei Unteranwendungen nicht auf die gleiche Plattform oder den gleichen Rechner einer Plattform verteilt werden dürfen.

Die Bedingungen zur Ausführung der Unteranwendungen können generell umfassen, dass bestimmte Unteranwendungen nicht auf die gleiche Ebene, die gleiche Plattform einer Ebene oder den gleichen Rechner einer Plattform verteilt werden dürfen. Dies kann z.B. Sicherheitsgründe haben.

Es kann auch vorgesehen sein, dass die Bedingungen zur Ausführung der Unteranwendungen umfassen, dass zwei verschiedene Unteranwendungen voneinander abhängig sind und wenn sie auf verschiedene Plattformen verteilt werden, die Kommunikation zwischen diesen Plattformen möglich ist.

Es kann vorgesehen sein, dass bei Änderung einer Voraussetzung der verschiedenen Ebenen bzw. Plattformen das Bedingungserfüllungsproblem geändert und erneut gelöst wird, und entsprechend der neuen Lösung des Bedingungserfüllungsproblems die Unteranwendungen auf Rechner der verschiedenen Ebenen bzw. Plattformen neu verteilt werden.

Die Änderung einer Voraussetzung der verschiedenen Ebenen bzw. Plattformen kann eine Änderung eines Zustands (z.B. verfügbare Rechenleistung, Speicherverlust, Abschalten einzelner Einheiten der Ebene, Verlust der Datenverbindung), oder einer Regel einer Plattform oder eines Rechners einer Plattform sein. Die Änderung des Zustands oder einer Regel kann die Änderung des Preises für eine oder mehrere Ressourcen auf zumindest einer der Plattformen umfassen.

Eine Regel kann z.B. lauten, dass wenn die Verwendung aller Instanzen einer Unteranwendung für eine bestimmte Zeit unter oder über einem bestimmten Schwellwert ist, dann soll die Zahl der verwendeten Instanzen entsprechend verringert oder vergrößert werden. Oder eine Regel kann sein, dass eine hohe Auslastung von Einheiten in der Edge annehmbar ist, solange der Preis für Rechenleistung in der Cloud über einem bestimmten Schwellwert liegt. Eine weitere Regel kann sein, dass die Anzahl der Instanzen von einer bestimmten Unteranwendungen erhöht wird wenn der Preis für Rechenleistung in der Cloud einen gewissen Wert unterschreitet, wodurch mehr Ausfallsicherheit erreicht werden kann.

Insbesondere kann die Änderung einer Voraussetzung der verschiedenen Plattformen eine Änderung der Auslastung einer Plattform oder eines Rechners einer Plattform sein.

Es kann vorgesehen sein, dass zumindest eine Bedingung zur Ausführung der Unteranwendungen durch eine verantwortliche Person, etwa den Entwickler, vorgegeben werden kann.

Eine Ausführungsform der Erfindung besteht darin, dass bei vom Anwender vorgegebenen Ereignissen das Bedingungserfüllungsproblem geändert und erneut gelöst wird, und entsprechend der neuen Lösung des Bedingungserfüllungsproblems die Unteranwendungen auf Rechner der verschiedenen Plattformen neu verteilt werden.

Da das erfindungsgemäße Verfahren auf bzw. mit einem Computer ausgeführt wird, umfasst die Erfindung auch ein entsprechendes Computerprogrammprodukt, welches wiederum Befehle umfasst, die bei der Ausführung des Programms durch einen Computer diesen veranlassen, alle Schritte des erfindungsgemäßen Verfahrens auszuführen. Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor eines Computers geladen werden kann.

Das Computerprogramm kann also folgende Schritte veranlassen bzw. selbst durchführen:
- dass Bedingungen zur Ausführung der Anwendung sowie auch der einzelnen Unteranwendungen in einer Datenbank, insbesondere in einer Graphdatenbank, erfasst werden (z.B. durch Eingabe durch einen Anwender oder durch Einlesen von Daten),
- dass den Bedingungen zur Ausführung entsprechende Voraussetzungen der verschiedenen Ebenen, nämlich Voraussetzungen der mindestens einen Plattform einer Ebene, in einer Datenbank, insbesondere einer Graphdatenbank, erfasst werden (z.B. durch Eingabe durch einen Anwender oder durch Einlesen von Daten),
- dass die für die bestimmte Anwendung notwendigen Unteranwendungen ausgewählt werden (z.B. durch Eingabe durch einen Anwender oder durch Einlesen von Daten),
- dass aus den Bedingungen für die Anwendung sowie auch für die einzelnen Unteranwendungen und aus den diesbezüglichen Voraussetzungen der verschiedenen Ebenen, nämlich der jeweils mindestens einen Plattform der Ebenen, automatisch ein Bedingungserfüllungsproblem erstellt und gelöst wird, und
- dass entsprechend der Lösung des Bedingungserfüllungsproblems die Unteranwendungen auf Rechner der verschiedenen Plattformen verteilt werden.

### KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Dabei zeigt
- Fig. 1: eine schematische Darstellung des Informationsflusses beim erfindungsgemäßen Verfahren,
- Fig. 2: eine Basisarchitektur für ein Computersystem zur Ausführung des erfindungsgemäßen Verfahrens,
- Fig. 3: eine grafische Darstellung zweier Unteranwendungen und deren Bedingungen zur Ausführung,
- Fig. 4: eine grafische Darstellung der Anwendung und ihrer Unteranwendungen, gemeinsam mit einer möglichen Ebene zur Ausführung der Unteranwendungen,
- Fig. 5: eine grafische Darstellung der Edge mit deren Voraussetzungen,
- Fig. 6: die Lösung des Bedingungserfüllungsproblems gemäß den Fig. 4 und 5,
- Fig. 7: ein Ergebnis der Ausführung der Anwendung gemäß den Fig. 4-6.

### WEGE ZUR AUSFÜHRUNG DER ERFINDUNG

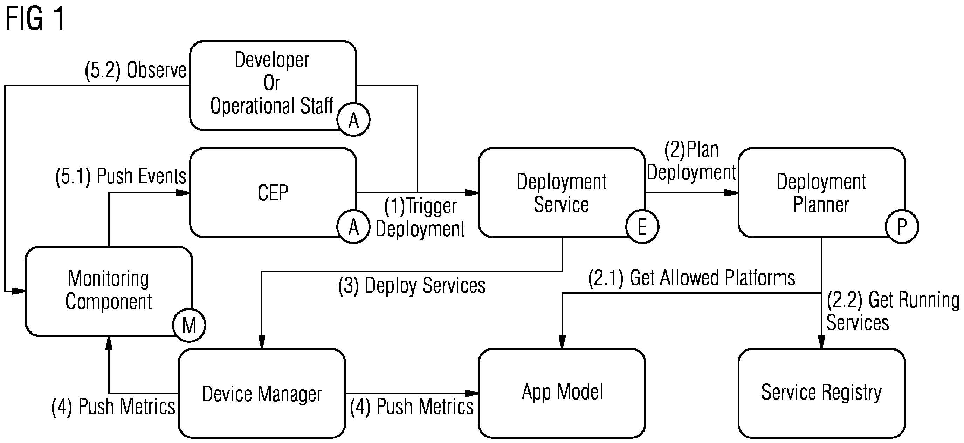

Fig. 1 zeigt den Informationsfluss in einem erfindungsgemäßen System. Es gibt verschiedene Wege wie eine neue Verteilung der Unteranwendungen erfolgen kann: durch händischen Eingriff des Anwenders, automatisch als Teil einer Continuous Integration (CI) pipeline oder durch Complex Event Processing (CEP). Continuous Integration (CI, kontinuierliche oder fortlaufende oder permanente Integration) beschreibt den Prozess des fortlaufenden Zusammenfügens von Unteranwendungen zu einer Anwendung. Weil dies sequentiell erfolgt, spricht man von einer pipeline. Beim Complex Event-Processing (CEP, deutsch komplexe Verarbeitung von Ereignissen) geht es um die Erkennung, Analyse, Gruppierung und Verarbeitung voneinander abhängiger Ereignisse. Die entsprechenden Methoden und Werkzeuge verarbeiten Ereignisse, während sie passieren, also kontinuierlich und zeitnah. CEP leitet aus Ereignissen höheres, wertvolles Wissen in Form von sog. komplexen Ereignissen ab, d. h. Situationen, die sich nur als Kombination mehrerer Ereignisse erkennen lassen. Um verschiedenartige Datenströme in Echtzeit zu verarbeiten und die Ereignisse zu extrahieren und zu analysieren, müssen von diesbezüglichen Systemen hohe Lasten verkraftet werden.

Fig. 1 zeigt einen MAPE Zyklus, MAPE steht für Monitor-Analyze-Plan-Execute. Die Überwachung (Monitor), Buchstabe M in Fig. 1, wird in der Überwachungsphase mittels der "Monitoring Component" durchgeführt, die Analyse (Analyze), Buchstabe A in Fig. 1, mit Hilfe des Complex Event Processing "CEP" (oder alternativ durch den Entwickler oder Betreiber, "Developer Or Operational Staff"), das Planen (Plan), Buchstabe P in Fig. 1, mittels des Verteilungsplaners ("Deployment Planner") und die Ausführung (Execute), Buchstabe E in Fig. 1, mit dem Verteilungsservice ("Deployment Service").

Das Complex Event Processing erlaubt es, dem Betreiber der Edge (dem sogenannten Performance Engineer oder dem Operations Manager) bestimmte Regeln für eine bestimmte Unteranwendung vorzugeben, z.B. dass nur zwei CPU Belastungsspitzen während einer bestimmten Zeitspanne auftreten dürfen, oder dass der Speicherverbrauch in einem bestimmten Zeitraum eine bestimmte Schwelle nicht überschreiten darf. Zusätzlich kann der Betreiber einen Rückruf (callback) der Unteranwendung vorsehen, wenn diese Regeln ausgelöst werden. Der Rückruf kann beispielsweise an das Verteilungsservice (Deployment Service) weitergeleitet werden, das eine neue Verteilung auslöst. Eine andere Möglichkeit für einen Rückruf wäre das Versenden einer Nachricht an eine Person die mit der Überwachung des Systems betraut ist.

Wenn eine Verteilung angestoßen wird, siehe Pfeil 1 "Trigger Deployment", dann ruft das Verteilungsservice (Deployment Service) den Verteilungsplaner (Deployment Planner) auf, auf dass dieser alle notwendigen Informationen zur Berechnung eines optimierten Verteilungsplans sammelt, siehe Pfeil 2 "Plan Deployment". Dies umfasst die für die zu verteilenden Unteranwendungen erlaubten Ebenen bzw. Einheiten (Allowed Platforms), siehe Pfeil 2.1 "Get Allowed Platforms", sowie die zur Zeit laufenden Anwendungen, siehe Pfeil 2.2 "Get Running Services". Die zu verteilenden Unteranwendungen werden vom Verteilungsservice (Deployment Service) oder vom Entwickler (Developer) zur Verfügung gestellt. Grundsätzlich sollten für eine Anwendung, die aus mehreren Unteranwendungen besteht, alle Unteranwendungen geplant werden und dann nur jene Unteranwendungen anders verteilt oder migriert werden, für die eine bessere Einheit zur Ausführung gefunden wird. Die dafür nötige Information kann vom App Model und von der Service Registry geliefert werden. Das App Model definiert wie eine Anwendung ausgeführt werden kann, welche Datenformate sie empfangen und senden kann und welche Operationen auf Daten sie braucht und zur Verfügung stellt. Die Service Registry enthält weitere Informationen zu den einzelnen Unteranwendungen, typischerweise deren Speicherort, deren Laufzeit und Bedingungen für deren Beendigung.

Die Information wird benötigt, um einen optimalen Verteilungsplan für die gegebenen Unteranwendungen zu erstellen. Dieser Verteilungsplan wird an das Verteilungsservice (Deployment Service) zurückgegeben, welches daraufhin das Deployment übernimmt und die Unteranwendungen an die Manager der Einheiten (Device Manager) verteilt, siehe Pfeil 3 "Deployment Manager". Nachdem eine Unteranwendung gestartet worden ist, registriert sie sich beim Manager der Einheiten (Device Manager), dieser beginnt, Messwerte, sogenannte Metrics, der ausführenden Einheit zu sammeln, wie etwa CPU Auslastung und verfügbarer Speicherplatz. Diese Messwerte werden an die Überwachungseinheit (Monitoring Component) weitergeleitet, siehe Pfeil 4 "Push Metrics". Der Manager der Einheiten (Device Manager) kann die Messdaten vorverarbeiten und diese in transformierter Form an die Überwachungseinheit (Monitoring Component) weiterleiten. Die Überwachungseinheit (Monitoring Component) ihrerseits leitet die Daten an die Complex Event-Processing Einheit CEP weiter, siehe Pfeil 5.1 "Push Events". Die Complex Event-Processing Einheit CEP analysiert die Daten auf Basis der vom Anwender vorgegebenen Regeln und triggert eine neue Verteilung der Unteranwendungen, wenn nötig, siehe Pfeil 1 "Trigger Deployment". Diese Verteilung kann zum Beispiel bewirken, dass die Unteranwendung skaliert wird, wobei dies davon abhängt, ob und welche Regeln definiert wurden. Ein Anwender könnte z.B. festlegen, wenn die Verwendung aller Instanzen einer Unteranwendung für eine bestimmte Zeit unter oder über einem bestimmten Schwellwert ist, dann soll die Zahl der verwendeten Instanzen entsprechend verringert oder vergrößert werden. Ein Anwender könnte auch festlegen, dass eine hohe Auslastung von Einheiten in der Edge annehmbar ist, solange der Preis für Rechenleistung in der Cloud über einem bestimmten Schwellwert liegt. Die Verteilung der Unteranwendungen kann auch vom Entwickler getriggert werden, wenn dieser entsprechende Anweisungen in der Steuereinheit für die Quellcodeversion einbaut, welche wiederum die Continuous Integration (CI) Pipeline triggert. Die Verteilung der Unteranwendungen kann auch vom Anwender manuell gestartet werden, wenn dieser es für notwendig erachtet. Dieses manuelle Starten der Verteilung ist durch Pfeil 5.2 "Observe" dargestellt.

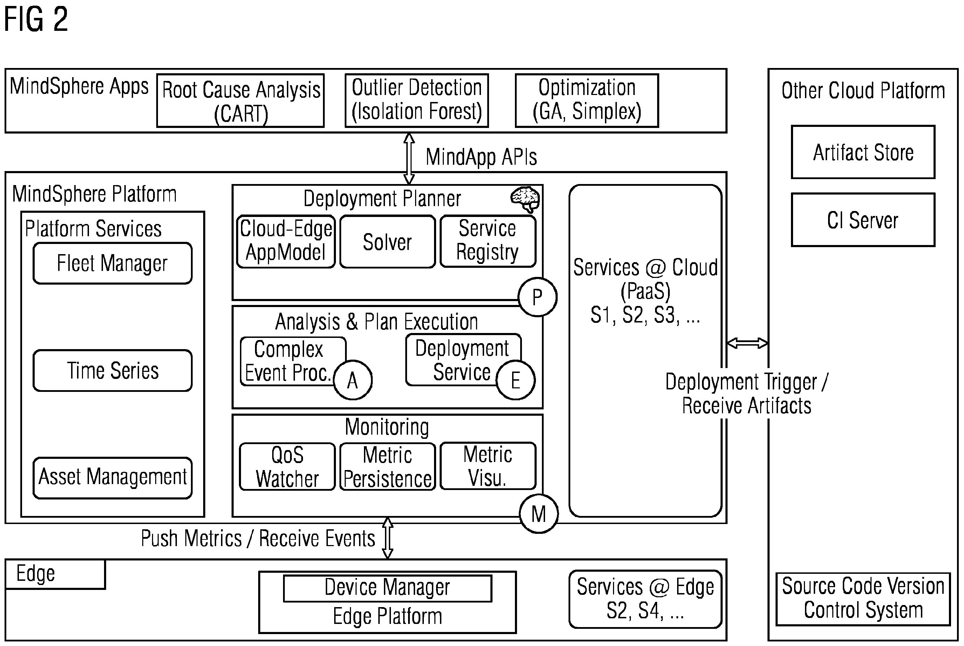

Fig. 2 zeigt eine mögliche Basisarchitektur der erfindungsgemäßen Lösung. Die Architektur umfasst ein cloudbasiertes, offenes IoT-Betriebssystem, hier mit dem Namen "MindSphere Platform" von Siemens. Diese ist mit der Ebene der Edge verbunden, um Messwerte und Ereignisse auszutauschen, was mit dem Doppelpfeil "Push Metrics/Receive Events" dargestellt ist.

Die Darstellung der Basisarchitektur in Fig. 2 zeigt der Übersicht halber lediglich jeweils eine konkrete Cloud- und Edge-Plattform. Das erfindungsgemäße Verfahren ist allerdings nicht auf eine einzelne Plattform pro Ebene beschränkt.

Das cloudbasierte, offene IoT-Betriebssystem "MindSphere Platform ist mit einer weiteren Ebene, "MindSphere Apps" verbunden, auf der weitere Anwendungen des IoT-Betriebssystems laufen, wie eine Ursachenanalyse für Fehler ("Root Cause Analysis (CART)"), eine Identifizierung von Abweichungen, z.B. mittels Isolation Forest Methode ("Outlier Detection (Isolation Forest)") und eine Optimierung, z.B. mit Simplexverfahren oder mit genetischen Algorithmen ("Optimization (GA, Simplex)").

Das cloudbasierte, offene IoT-Betriebssystem "MindSphere Platform" umfasst links dargestellt allgemeine Services ("Platform Services"), in der Mitte dargestellt das Werkzeug zur automatischen Verteilung der Unteranwendungen und rechts dargestellt die Unteranwendungen "Services@Cloud", S1, S2, S3, die in der Cloud ausgeführt werden können. Die allgemeinen Services ("Platform Services") umfassen z.B. einen "Fleet Manager" (der es erlaubt die Messwerte, die für Eigenschaften verschiedener Einheiten gesammelt wurden, zu visualisieren), "Time Series" (eine Einheit zur Aufzeichnung von zeitlich aufeinander folgenden Messwerten) und ein "Asset Management" (der es erlaubt diverse Eigenschaften einer Gruppe von Einheiten, wie z.B. Motoren, zu definieren).

Das Werkzeug zur automatischen Verteilung der Unteranwendungen hat drei Ebenen und setzt einen MAPE Zyklus um. Die Ebene des Verteilungsplaners (Deployment Planner) ist zuständig für die Berechnung eines optimalen Verteilungsplanes für jede Verteilanfrage. Diese Ebene umfasst das Cloud-Edge-Anwendungsmodell (Cloud Edge App Model) wo Entwickler ihre Anwendungen gemeinsam mit den nichtfunktionalen Anforderungen (englisch non-functional requirement, NFR) definieren und wo diese Informationen in einer Graphdatenbank gespeichert werden. Eine genauere Beschreibung des Datenmodells und der Anwendungen dazu folgt noch. Alle laufenden Unteranwendungen werden in der Service Registry registriert. Zusätzlich ist ein Lösungsdienst (Solver) vorgesehen, der eine Schnittstelle zur Anwendungsprogrammierung (API, englisch application programming interface) zur Verfügung stellt, also einen Programmteil, der anderen Programmen für die Anbindung an die einzelne Unteranwendung dient. Auf diese Weise kann ein neuer Verteilungsplan erstellt werden. Der Anwender hat hier mehrere Möglichkeiten zur Einflussnahme:
Erstens kann der Anwender nur die Unteranwendungen nennen, die er verteilen will, und sonst die vorgegebenen Modelle mit den vorgegebenen Zielfunktionen verwenden. Zweitens kann der Anwender eine eigene Zielfunktion vorgeben, die zur Optimierung der Verteilung verwendet wird. Drittens kann der Anwender überhaupt ein eigenes Modell zur Verteilung der Unteranwendungen vorgeben.

Die zweite Ebene heißt "Analysis & Plan Execution" und umfasst die Planung und Ausführung, sie enthält entsprechend die Complex Event-Processing Einheit CEP und das Verteilungsservice (Deployment Service). Die zweite Ebene bereitet die Daten für die Planung auf und führt die Verteilung als Resultat der Planung aus. Das Verteilungsservice (Deployment Service) dient als Eingang zum System. Ein Entwickler kann hier eine neue Verteilung triggern. Das Verteilungsservice (Deployment Service) erhält dann den optimierten Verteilungsplan vom Verteilungsplaner (Deployment Planner) und übernimmt die tatsächliche Verteilung.

In der dritten Ebene, dem "Monitoring", sind hier drei Anwendungen vorgesehen, "QoS Watcher" welcher die Messwerte der Einheiten entgegen nimmt, an das Complex Event Processing weiterleitet und entsprechend der vom Benutzer definierten Regeln Rückrufe ausführt. Die "Metric Persistence" welche ebenfalls Messwerte von dem "QoS Watcher" erhält und diese in einer Datenbank ablegt. Die "Metric Visu" (kurz für "Metric Visualization") welche es erlaubt die von der "Metric Persistence" abgelegten Messwerte zu laden und graphisch anzuzeigen.

In der Edge Ebene laufen Einheiten, die den Manager der Einheiten (Device Manager) beherbergen. Dieser ist verantwortlich dafür, jene Anwendungen zu überwachen, die auf dem gleichen Host (Rechner) laufen wie er, und Messwerte in die Cloud zu senden. Weiters erhält der Manager der Einheiten (Device Manager) Befehle vom Verteilungsplaner (Deployment Planner), um bestimmte Unteranwendungen zu starten oder zu stoppen. Die Unteranwendungen "Services@Edge", S2, S4 können in der Edge ausgeführt werden.

Rechts in Fig. 2 sind andere Cloud-Anwendungen (Other Cloud Platform) darstellt, hier auf IaaS (Infrastructure as a Service) Basis. Sie enthalten etwa Anwendungen zur verteilten Versionsverwaltung von Dateien (Source Code Version Control System), wie Git. Wenn Entwickler ihre Änderungen an Anwendungen zur verteilten Versionsverwaltung senden, wird ein CI Server (z.B. von Jenkins) zur Continuous Integration getriggert, um die neueste Änderung herauszufinden und die Anwendung dann entsprechend aus den gegebenenfalls geänderten Unteranwendungen aufzubauen. Ist der Aufbau erfolgreich, werden die resultierenden Software-Artefakte in einem Artefakt-Speicher (Artifact Store) gespeichert, z.B. in einem JFrog Artifactory. Wenn alle Unteranwendungen erfolgreich zu einer Anwendung zusammengesetzt worden sind, triggert der CI Server eine neue Verteilung (redeployment) der Unteranwendungen beim Verteilungsservice (Deployment Service). Diese Vorgänge zwischen den anderen Cloud-Anwendungen und dem Cloud-Bereich "Mindsphere Platform" sind in Fig. 2 durch den Doppelpfeil "Deployment Trigger / Receive Artifacts" dargestellt.

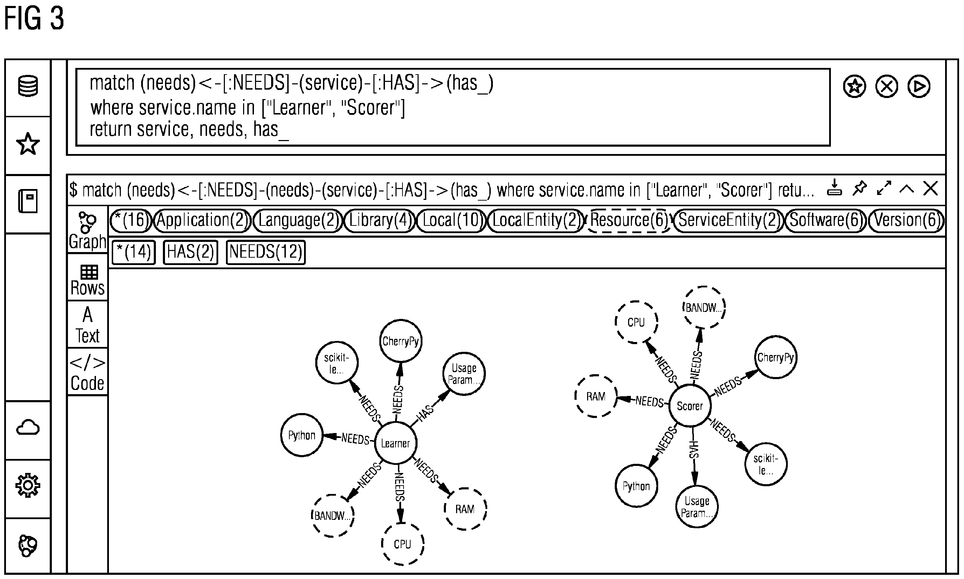

Zur Illustration des Informationsflusses beim erfindungsgemäßen Verfahren soll nun anhand der Fig. 3-7 ein kleiner Anwendungsfall vorgestellt werden. Es wurde hier eine Anwendung zum Detektieren von Ausreißern implementiert, die Ausreißer-Anwendung, und zwar mittels zweier Unteranwendungen, dem Lerner ("Learner") und dem Auswerter ("Scorer"). Ziel ist es, Ausreißer in Sensor-Messwerten zu detektieren, z.B. der Motortemperatur. Beide Unteranwendungen werden im Beispiel mittels der Programmiersprache Python implementiert. Als Bibliothek für das Machine Learning wurde skicit-learn verwendet, für das Lernen des Modells eine Isolation Forest Methode.

Der Lerner sammelt Daten, speichert sie lokal und trainiert ein Machine Learning Modell zum Detektieren von Ausreißern. Der Lerner trainiert das Modell in regelmäßigen Abständen neu, um sich verändernde Bedingungen zu berücksichtigen. Nachdem das Modell trainiert ist, wird es an einem Speicherort gespeichert, der für beide Unteranwendungen zugänglich ist. Da der Lerner, in Abhängigkeit der Trainingsintervalle, beim Trainieren möglicherweise ziemlich viele Daten zu verarbeiten hat, wird er dafür viel Rechenleistung benötigen, zudem kann die Anzahl der Modelle, für welche Daten gesammelt werden müssen, über die Zeit schwanken. Die Skalierbarkeit der Unteranwendung wäre also von Vorteil. Eine zeitnahe oder sogar Echtzeit-Datenverarbeitung für das Modell oder die Datensammlung hingegen ist nicht notwendig.

Der Auswerter lädt auf Anfrage verfügbare Modelle vom Speicherort und wertet diese aus, d.h. er wendet ein Modell auf einen gegebenen Datensatz an. Er sendet dann den Datensatz zu einer Zeitserien-Datenbank ("time series store", siehe Anwendung "Time Series" in Fig. 2) und markiert ihn dort als möglichen Ausreißer, je nach Ergebnis der Auswertung. Zusätzlich retourniert der Auswerter die Information, ob ein Ausreißer vorliegt, an die anfragende Anwendung. Die Auswertung braucht nicht viele Ressourcen und die Modelle sind meist viel kleiner als die Dateien mit den Datensätzen. Insofern kann der Auswerter auf Einheiten ausgeführt werden, die nur beschränkte Ressourcen zur Verfügung haben. Andererseits ist es wahrscheinlich, dass die anfragende Anwendung die Information, ob ein Ausreißer vorliegt oder nicht, zeitnahe benötigt, d.h. die Auswertung sollte annähernd in Echtzeit erfolgen.

Beide Unteranwendungen wurden implementiert und im App Model abgespeichert, also deren Anforderungen an Ressourcen, Software und Verwendung. Dies ist in Fig. 3 dargestellt. Der Lerner ("Learner") benötigt ("NEEDS") RAM, CPU, Bandbreite "BANDW.." und verschiedene Software wie Python, und hat ("HAS") verschiedene Verwendungsparameter ("Usage Param."). Gleiches gilt für den Auswerter ("Scorer").

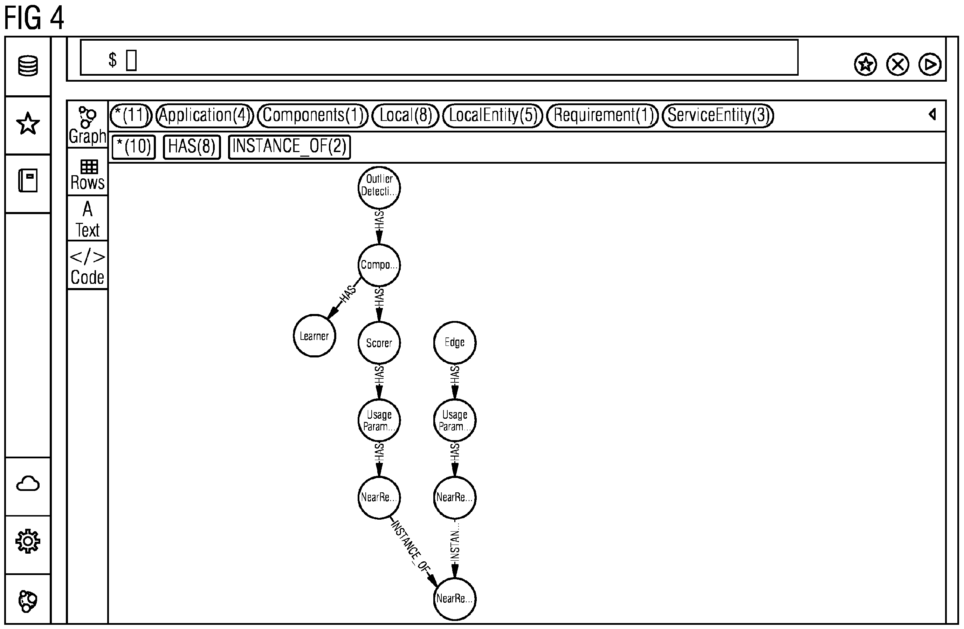

In Fig. 4 ist ersichtlich, dass die Ausreißer-Anwendung "Outlier Detector" zwei Unteranwendungen "Learner" und "Scorer" umfasst (HAS"), die jeweils Verwendungsparameter ("Usage Param.") haben. Diese Verwendungsparameter, in diesem Fall "NearRealtime" ("NearRea..."), also "annähernd Echtzeit", können von Plattformen zur Verfügung gestellt werden, hier von der Edge.

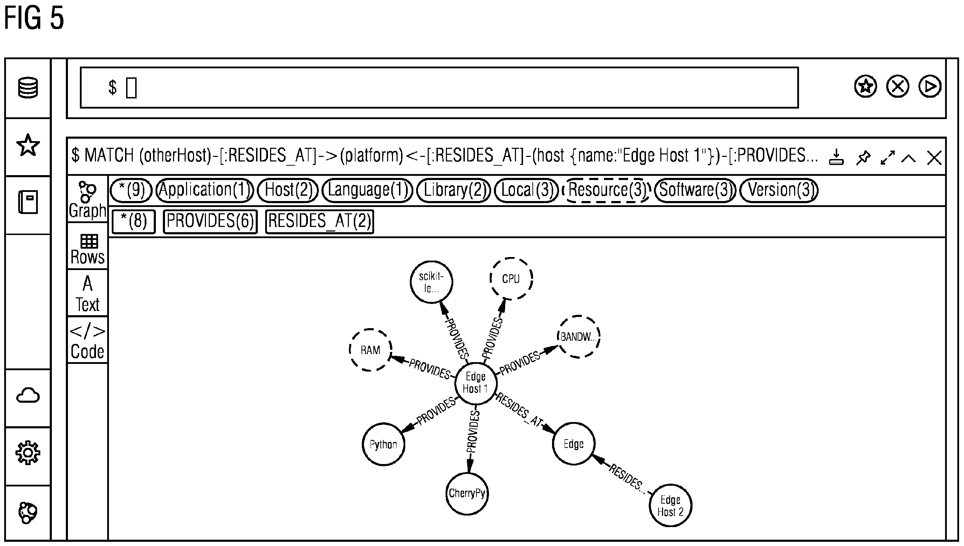

Es wurden zwei Plattformen (eine für jede Ebene) definiert, auf welche Unteranwendungen verteilt bzw. ausgelagert werden können, nämlich eine private Cloud Plattform und eine Edge Plattform. Die private Cloud Plattform ("Edge Host 1") stellt ("PROVIDES") variable Skalierung und Vertraulichkeit zur Verfügung, sowie RAM, CPU, Bandbreite "BANDW..." und verschiedene Software wie Python. Dies ist in Fig. 5 dargestellt.

Der folgende Informationsfluss geht davon aus, dass mit einem MindSphere System gearbeitet wird und dass auf jedem Host (Rechner), der nicht direkt von einer Plattform verwaltet wird, ein Device Manager ausgeführt wird. Um die Ausreißer-Anwendung zu starten und die Unteranwendungen zu verteilen, muss einfach der entsprechende REST Endpunkt des Verteilungsservice (Deployment Service) aufgerufen werden, mit einer Zuordnung der Namen der Unteranwendungen zu einer ganzen Zahl, welche der gewünschten Anzahl an Instanzen entspricht. Dies entspricht dem Pfeil (1) "Trigger Deployment" in Fig. 1. Dann ruft das Verteilungsservice (Deployment Service) den Verteilungsplaner (Deployment Planner) auf, mit einer Liste der Unteranwendungen, die verteilt werden sollen. Der Verteilungsplaner (Deployment Planner) sammelt alle notwendigen Informationen zur Berechnung eines optimierten Verteilungsplans, siehe Pfeil 2 "Plan Deployment". Zuerst kontaktiert der Verteilungsplaner (Deployment Planner) das App Model, um die erlaubten Einheiten (Allowed Platforms) für die benötigten Unteranwendungen zu finden, siehe Pfeil 2.1 "Get Allowed Platforms" in Fig. 1.

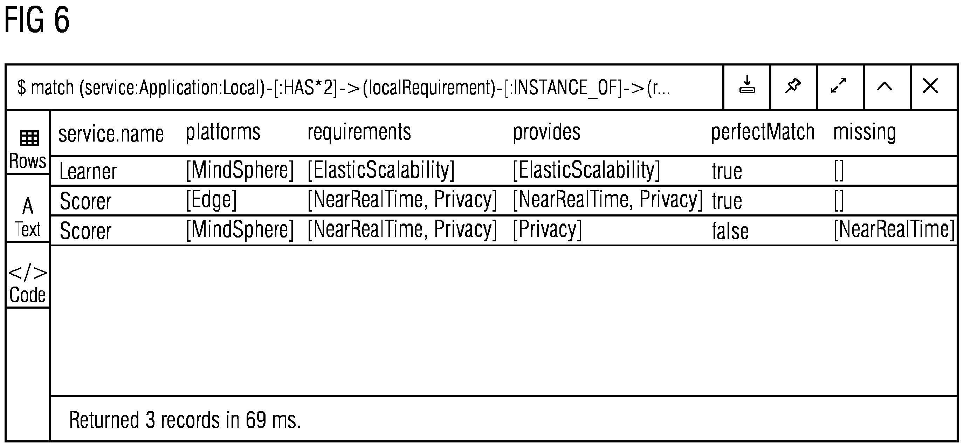

Das interne Resultat des App Model dazu ist in Fig. 6 dargestellt. Es werden die Namen der Unteranwendungen "service.name" gelistet, dazu die möglichen Plattformen ("platforms") bzw. Ebenen, also die private Cloud ("MindSphere") und die Edge, die notwendigen Anforderungen ("requirements") bzw. verfügbaren Eigenschaften ("provides"), wie Skalierbarkeit ("ElasticScalability"), annähernd Echtzeit-Datenverarbeitung ("NearRealTime") und Vertraulichkeit ("Privacy"). In der Spalte "perfectMatch" wird mit "true" (wahr) und "false" (falsch) dargestellt, ob es eine Übereinstimmung von notwendigen Anforderungen und verfügbaren Eigenschaften gibt. In der letzten Spalte "missing" wird angegeben, welche notwendigen Anforderungen nicht erfüllt sind.

Das Resultat wird transformiert, z.B. in JSON, und an den Verteilungsplaner (Deployment Planner) zurückgesendet. Das Resultat kann eine einfache Zuordnung sein, die jeder Unteranwendung zu einer Liste von Plattformen zuordnet, auf die sie verteilt werden kann. Dies entspricht der Antwort in Gegenrichtung zu Pfeil 2.1 "Get Allowed Platforms" in Fig. 1.

Der Verteilungsplaner (Deployment Planner) holt anschließend die Liste der zur Zeit laufenden Anwendungen, siehe Pfeil 2.2 "Get Running Services", kreiert aus den Daten eine Datei und den dynamischen Teil eines CSP Verfahrens, das hier mittels einer entsprechenden Programmiersprache definiert und einem entsprechendem Verfahren gelöst wird. Die grundlegenden Randbedingungen sind in einer Datei für das statische Modell festgelegt. Die grundlegenden Randbedingungen sind:
- kein Host kann Unteranwendungen übernehmen, die seine Ressourcen übersteigen
- alle Unteranwendungen müssen auf genau einen Host verteilt werden, der auf einer Plattform ist, auf welchen die Unteranwendung verteilt werden darf
- der Host muss die benötigte Software in der richtigen Version zur Verfügung stellen.

Das dynamische Modell enthält Randbedingungen, die von Planung zu Planung variieren können, z.B. dass bestimmte Unteranwendungen nicht gemeinsam verteilt werden dürfen, also nicht auf dem gleichen Host laufen dürfen.

Der Verteilungsplaner (Deployment Planner) erstellt eine Datei aus seinem Input. Wenn die Programmiersprache nur mit ganzen Zahlen und Matrizen arbeiten kann, müssen die Daten aus dem Input an die Struktur dieser Programmiersprache angepasst werden. Die Darstellung, welche Ressourcen auf welchem Host/welcher Plattform zur Verfügung stehen, wird beispielsweise als Matrix (h x r) dargestellt, wobei h den Host/die Plattform und r die Ressource repräsentiert, und wobei die Zahl n in der Position (h, r) angibt, wie viele Ressourcen r der Host/die Plattform h hat.

Das Ergebnis des Lösungsverfahrens ist eine einzige Zuordnungsmatrix oder -datenreihe, wo die Zahl i auf Position j aussagt, dass die Unteranwendung j dem Host/der Plattform i zugeordnet, also auf diesen verteilt, wird. Diese Zuordnungsmatrix oder -datenreihe wird durch den Verteilungsplaner (Deployment Planner) entsprechend rückübersetzt und das Ergebnis dem Verteilungsservice (Deployment Service) zurückgeleitet.

Der Verteilungsplaner (Deployment Planner) kümmert sich um die tatsächliche Verteilung der Unteranwendungen. Wenn die Zielplattform eine Cloud Plattform ist, wird eine entsprechende Programmbibliothek zur Verteilung verwendet. Wenn die Zielplattform eine Edge Plattform ist, dann sendet der Verteilungsplaner (Deployment Planner) einen Befehl an den entsprechenden Manager der Einheiten (Device Manager), der dann den Software-Artefakt lädt und die Unteranwendung startet. Der Device Manager überwacht die Unteranwendung und sendet Messwerte zur Qualitätseinheit (QoS Watcher, siehe Fig. 2), welche die Qualität der Ausführung der Unteranwendung überwacht und die Messwerte an die Complex Event-Processing Einheit CEP weiterleitet. Damit schließt sich der MAPE Zyklus. Nur wenn der Entwickler sich entscheidet, eine neue Verteilung anzustoßen, oder die Complex Event-Processing Einheit CEP ein entsprechendes Ereignis detektiert, dann wird die ganze Kette zur Verteilung der Unteranwendungen wieder gestartet.

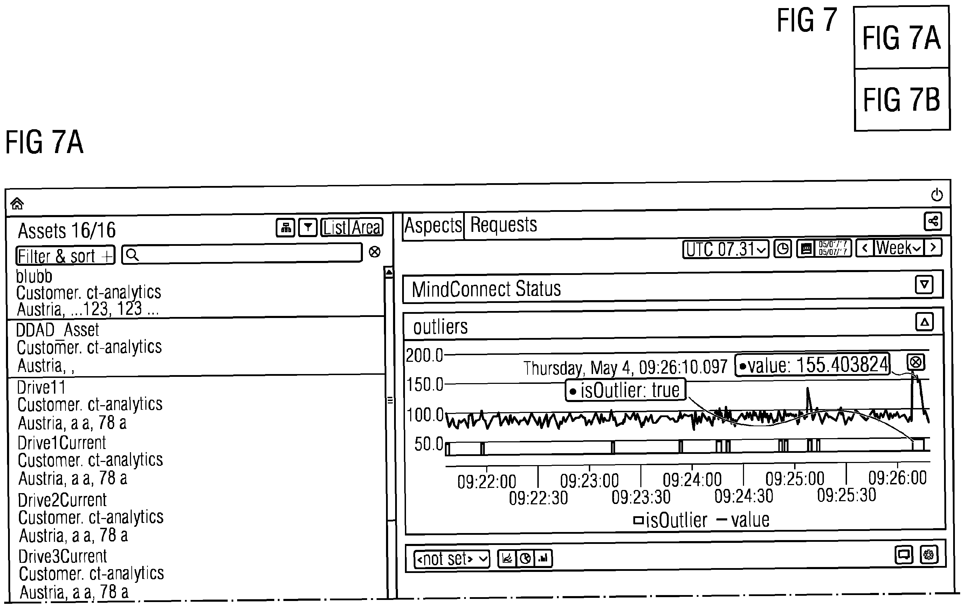

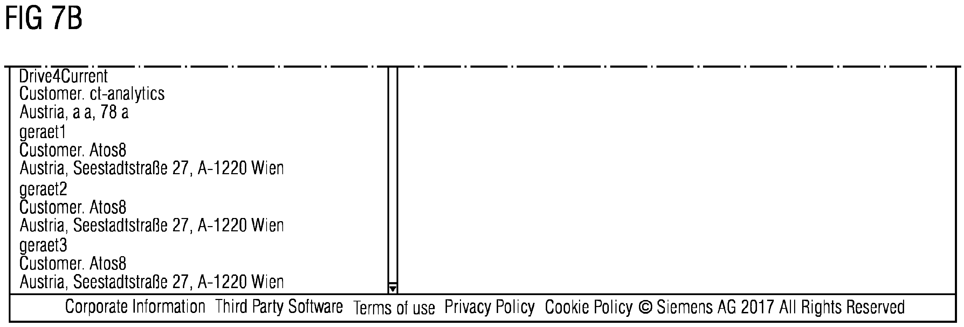

Fig. 7 zeigt die Einbindung der Ausreißer-Anwendung in die Anwendung "Fleet Manager", die auf der "MindSphere Platform" läuft, siehe Fig. 2, und die hier mehrere Motoren überwacht und steuert. Links in Fig. 7 sind die verfügbaren Ansichten im "Fleet Manager" dargestellt, rechts ist die ausgewählte Ansicht dargestellt, welche mit Hilfe der Ausreißer-Anwendung erstellt wird. Rechts zeigt die obere Kurve den zeitlichen Verlauf (abgespeichert in "Time Series") der Messwerte der Temperatur eines Motors. Die untere Kurve zeigt mit "1" an, dass ein Ausreißer vorliegt, mit "0", dass kein Ausreißer vorliegt. Die Anwendung "Fleet Manager" kann nun ein Alarmsignal ausgeben, wenn ein Ausreißer festgestellt wird.

## Patentansprüche

1. Verfahren, unter Verwendung eines Computers, zum Verteilen von Unteranwendungen einer bestimmten Anwendung auf Rechner zumindest zweier verschiedener Ebenen, umfassend jeweils mindestens eine konkrete Plattform, wobei eine erste Ebene mehr Rechenleistung zur Verfügung hat als eine zweite Ebene, **dadurch gekennzeichnet,**
- **dass** Bedingungen zur Ausführung der Anwendung sowie auch der einzelnen Unteranwendungen in einer Datenbank, insbesondere in einer Graphdatenbank, erfasst werden,
- **dass** den Bedingungen zur Ausführung entsprechende Voraussetzungen der verschiedenen Ebenen, nämlich Voraussetzungen der mindestens einen Plattform einer Ebene, in einer Datenbank, insbesondere einer Graphdatenbank, erfasst werden,
- **dass** die für die bestimmte Anwendung notwendigen Unteranwendungen ausgewählt werden,
- **dass** aus den Bedingungen für die Anwendung sowie auch für die einzelnen Unteranwendungen und aus den diesbezüglichen Voraussetzungen der verschiedenen Ebenen, nämlich der jeweils mindestens einen Plattform der Ebenen, automatisch ein Bedingungserfüllungsproblem erstellt und gelöst wird, und
- **dass** entsprechend der Lösung des Bedingungserfüllungsproblems die Unteranwendungen auf Rechner der verschiedenen Plattformen verteilt werden.

2. Verfahren nach Anspruch 1, **dadurch gekennzeichnet, dass** bei der Erstellung des Bedingungserfüllungsproblems die Kosten für Ressourcen auf den einzelnen Plattformen berücksichtigt werden.

3. Verfahren nach einem der vorhergehenden Ansprüche, **dadurch gekennzeichnet, dass** die Bedingungen zur Ausführung der Unteranwendungen und/oder die Voraussetzungen der verschiedenen Ebenen und/oder der konkreten Plattformen zumindest eine der folgenden Eigenschaften umfassen: Zuverlässigkeit, Verfügbarkeit, Skalierbarkeit, Vertraulichkeit, Effizienz, Sicherheit, Verwendbarkeit, Preise für unterschiedliche Ressourcen, Kommunikation mit anderen Unteranwendungen und/oder Plattformen.

4. Verfahren nach einem der vorhergehenden Ansprüche, **dadurch gekennzeichnet, dass** die Bedingungen zur Ausführung der Unteranwendungen und/oder die Voraussetzungen der verschiedenen Ebenen und/oder der konkreten Plattformen und/oder der einzelnen Rechner zumindest eine der folgenden Eigenschaften umfassen: Vorhandensein zumindest einer bestimmten zusätzlich benötigten Hard- und/oder Software, insbesondere in der richtigen Version.

5. Verfahren nach einem der vorhergehenden Ansprüche, **dadurch gekennzeichnet, dass** entsprechend der Lösung des Bedingungserfüllungsproblems zumindest eine Unteranwendung auf einen bestimmten Rechner einer konkreten Plattform einer Ebene verteilt wird.

6. Verfahren nach einem der vorhergehenden Ansprüche, **dadurch gekennzeichnet, dass** die Bedingungen zur Ausführung der Unteranwendungen umfassen, dass bestimmte Randbedingungen automatisch, basierend auf vorhandener Information ermittelt werden.

7. Verfahren nach einem der vorhergehenden Ansprüche, **dadurch gekennzeichnet, dass** die Bedingungen zur Ausführung der Unteranwendungen umfassen, dass die Kommunikation zwischen mindestens zwei voneinander abhängigen Unteranwendungen, die auf mindestens zwei verschiedenen Plattformen verteilt sind, möglich ist.

8. Verfahren nach einem der vorhergehenden Ansprüche, **dadurch gekennzeichnet, dass** bei Änderung einer Voraussetzung der verschiedenen Plattformen das Bedingungserfüllungsproblem geändert und erneut gelöst wird, und entsprechend der neuen Lösung des Bedingungserfüllungsproblems die Unteranwendungen auf Rechner der verschiedenen Plattformen neu verteilt werden.

9. Verfahren nach Anspruch 8, **dadurch gekennzeichnet, dass** die Änderung einer Voraussetzung der verschiedenen Plattformen eine Änderung eines Zustands oder einer Regel einer Plattform oder eines Rechners einer Plattform ist.

10. Verfahren nach Anspruch 9, **dadurch gekennzeichnet, dass** die Änderung einer Voraussetzung der verschiedenen Plattformen eine Änderung der Auslastung einer Plattform oder eines Rechners einer Plattform ist.

11. Verfahren nach einem der vorhergehenden Ansprüche, **dadurch gekennzeichnet, dass** zumindest eine Bedingung zur Ausführung der Unteranwendungen durch eine verantwortliche Person vorgegeben wird.

12. Verfahren nach einem der vorhergehenden Ansprüche, **dadurch gekennzeichnet, dass** bei vom Anwender vorgegebenen Ereignissen das Bedingungserfüllungsproblem geändert und erneut gelöst wird, und entsprechend der neuen Lösung des Bedingungserfüllungsproblems die Unteranwendungen auf Rechner der verschiedenen Plattformen neu verteilt werden.

13. Verfahren nach einem der vorhergehenden Ansprüche, **dadurch gekennzeichnet, dass** zumindest eine Plattform der ersten Ebene eine über das Internet erreichbare Rechnerwolke ist.

14. Verfahren nach einem der vorhergehenden Ansprüche, **dadurch gekennzeichnet, dass** zumindest eine Plattform der zweite Ebene ein dem Anwender des Verfahrens räumlich nahe liegendes Rechner-Netzwerk ist, das einen zeitlich kürzeren Datentransport vom und zum Computer des Anwenders erlaubt als eine Plattform der ersten Ebene.

15. Computerprogrammprodukt, umfassend Befehle, die bei der Ausführung des Programms durch einen Computer diesen veranlassen, alle Schritte des Verfahrens nach einem der Ansprüche 1 bis 14 auszuführen.
